# EUROPÄISCHE PATENTANMELDUNG

(11) **EP 1 506 892 A2**
(43) Veröffentlichungstag der Anmeldung: **16.02.2005**
(21) Anmeldenummer: 04016891.6
(22) Anmeldetag: 16.07.2004
(51) Int. Cl.: B60Q 1/00, B60Q 1/32

(54) **Fahrzeugleuchte mit einem Lichtleitkörper zum Einbau in einer Tür**

(30) Priorität: 13.08.2003 DE 20312518 U
(71) Anmelder: FER Fahrzeugelektrik GmbH, 99819 Eisenach (DE)
(72) Erfinder: Lantzsch, Klaus, D-99817 Eisenach (DE); Dr. Wimbert, Frank, D-52070 Aachen (DE)
(74) Vertreter: Strasser, Wolfgang, Dipl.-Phys

(57) **Zusammenfassung**

Eine zum Einbau in den unteren Bereich (2) der Innenseite einer Fahrzeugtür (1) bestimmte Fahrzeugleuchte (5) weist zwei getrennte Lichtquellen-Anordnungen auf, von denen bei geöffneter Fahrzeugtür (1) die eine als Umfeldleuchte ihr Licht im wesentlichen nach unten zur Ausleuchtung des Bodens im Türeinstiegsbereich und die andere als Warnleuchte ihr Licht im wesentlichen horizontal, d. h. senkrecht zur Innenfläche der Tür (1) abgibt. Zur Verringerung des für die Herstellung und den Zusammenbau erforderlichen Aufwands ist vorgesehen, dass das Licht der beiden Lichtquellen-Anordnungen in einen gemeinsamen Lichtleitkörper (10) eingespeist, von diesem aber getrennt weitergeleitet und abgestrahlt wird.

## Beschreibung

Die Erfindung betrifft eine Fahrzeugleuchte der im Oberbegriff von Anspruch 1 niedergelegten Art.

Es ist bekannt, in die Innenseite von Fahrzeugtüren, insbesondere von Kraftfahrzeugen, eine Warnleuchte einzubauen, die beim Öffnen der Fahrzeugtür eingeschaltet wird und im wesentlichen senkrecht zur Innenfläche der Fahrzeugtür, d. h. im wesentlichen in horizontaler Richtung rotes Licht abstrahlt, um andere Verkehrsteilnehmer, die sich dem Fahrzeug von hinten nähern, vor dem durch die geöffnete Tür gebildeten zusätzlichen Hindernis zu warnen.

Auch ist es bekannt, in den unteren Kantenbereich von Fahrzeugtüren eine sogenannte Vorfeldleuchte einzubauen, die beim Öffnen der Fahrzeugtür eingeschaltet wird und im allgemeinen weißes Licht im wesentlichen senkrecht nach unten abstrahlt, um den Boden des Außenbereichs neben dem Fahrzeug zu beleuchten und so das Ein- und Aussteigen zu erleichtern und im Einstiegbereich liegende Hindernisse und/oder nicht zum Betreten geeignete Bodenbereiche sichtbar zu machen.

Nachteilig ist dabei der erhöhte technische Aufwand, der getrieben werden muß, um zwei solche Fahrzeugleuchten in eine Fahrzeugtür einzubauen.

Demgegenüber liegt der Erfindung die Aufgabe zugrunde, eine Fahrzeugleuchte der eingangs genannten Art so weiterzubilden, daß der für die Erzielung sowohl der Warn- als auch der Vorfeld-Beleuchtungsfunktion erforderliche technische Aufwand erheblich vermindert wird.

Zur Lösung dieser Aufgabe sieht die Erfindung die im Anspruch 1 zusammengefaßten Merkmale vor.

Dadurch, daß die beiden Leuchtfunktionen in eine einzige Leuchte integriert werden, wird im Vergleich zum Stand der Technik, bei dem für diesen Zweck zwei voneinander völlig verschiedene Leuchten hergestellt und in eine Fahrzeugtür eingebaut werden müssen, sowohl der Herstellungs-als auch der Einbau-Aufwand praktisch halbiert.

Eine besonders vorteilhafte Ausführungsform einer erfindungsgemäßen Fahrzeugleuchte zeichnet sich dadurch aus, daß sie einen einzigen Lichtleitkörper umfaßt, in den von zwei getrennten Lichtquellen-Anordnungen, von denen jeweils eine einer der beiden Leuchtfunktionen zugeordnet ist, farblich verschiedene Lichtbündel so eingespeist werden, daß sie durch den Lichtleitkörper zu ihren jeweiligen Austrittsflächen hin geleitet werden, ohne sich dabei zu vermischen.

Diese und weitere vorteilhafte Merkmale und Ausgestaltungen eine erfindungsgemäßen Fahrzeugleuchte sind in den Unteransprüchen niedergelegt.

Die Erfindung wird im folgenden anhand eines Ausführungsbeispiels unter Bezugnahme auf die Zeichnung beschrieben; in dieser zeigen:
- Figur 1: eine stark schematisierte Vorderansicht der wesentlichen Teile einer erfindungsgemäßen Fahrzeugleuchte in der Einbauposition,
- Figur 2: eine Seitenansicht der Fahrzeugleuchte aus Figur 1 in Richtung des Pfeiles II und
- Figur 3: eine Schnittansicht durch die Fahrzeugleuchte aus Figur 1 längs der Linie III-III.

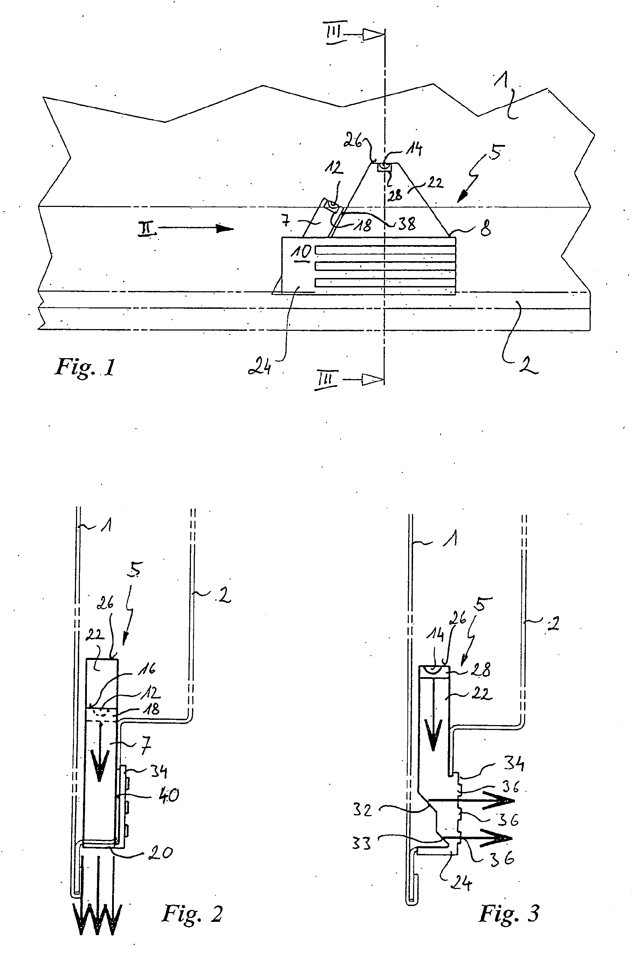

In Figur 1 ist die Vorderansicht eines Ausschnitts einer Fahrzeugtür 1 in deren unteren Kantenbereich 2 wiedergegeben, in welchem eine erfindungsgemäße Fahrzeugleuchte 5 montiert ist. Von dieser Fahrzeugleuchte 5 sind nur die wesentlichen Bestandteile dargestellt, nämlich ein mehrere einstückig miteinander verbundene Teil-Lichtleitkörper 7, 8 umfassender Lichtleitkörper 10 und zwei Leuchtdioden 12, 14 die den beiden unterschiedlichen Leuchtfunktionen der Fahrzeugleuchte 5 zugeordnet sind.

Der erste Teil-Lichtleitkörper 7, der zur Realisierung der Leuchtfunktion der Umfeldleuchte vorgesehen ist, hat die Form eines im horizontalen Querschnitt rechteckigen, langgestreckten Prismas, dessen Längsrichtung in Einbaulage gegen die Vertikale unter einem spitzen Winkel geneigt angeordnet ist und in dessen obere Stirnfläche 16 eine Vertiefung 18 eingearbeitet ist, in welche die zugehörige Leuchtdiode 12 so hineinragt, daß das von ihr abgegebene Licht vollständig in den ersten Teil-Lichtleitkörper 7 eingekoppelt wird und von diesem zu seiner unteren Stirnfläche 20 weitergeleitet wird, ohne daß Licht durch eine seiner Seitenflächen hindurch austritt.

Dies kann entweder dadurch erfolgen, daß die Winkel, unter denen die von der Leuchtdiode 12 abgegebenen Lichtstrahlen auf diese Seitenflächen treffen, unterhalb des Grenzwinkels der Totalreflexion gehalten werden und/oder daß diese Seitenflächen von außen her verspiegelt sind. Wesentlich ist, daß das von der zugehörigen Leuchtdiode 12 in den ersten Teil-Lichtleitkörper 7 eingekoppelte Licht in diesem so nach unten geleitet wird, daß es nicht oder nur minimal in den zweiten Teil-Lichtleitkörper 8 übertritt und nahezu vollständig aus der unteren Stirnfläche 20 als Lichtbündel abgestrahlt wird, das hauptsächlich nach unten gerichtet ist und somit bei geöffneter Tür den Boden neben dem Fahrzeug beleuchtet, der den Türeinstiegsbereich bildet. Gegebenenfalls kann in der unteren Stirnfläche 20 des ersten Teil-Lichtleitkörpers 7 eine (nicht dargestellte) optisch wirksame Struktur vorgesehen sein, die für eine gewünschte spezielle Lichtverteilung sorgt.

Auch in der Vertiefung 18 kann eine (nicht dargestellte) optisch wirksame Struktur vorgesehen und vorzugsweise mit dem ersten Teil-Lichtleitkörper 7 einstückig ausgebildet sein, die als Linse wirkt und dem von der Leuchtdiode 12 abgegebenen Lichtbündel den für eine gute Einkopplung und Weiterleitung optimalen Öffnungswinkel verleiht. Der Leuchtfunktion einer Umfeldleuchte entsprechend gibt die Leuchtdiode 12 weißes Licht ab.

Der zweite Teil-Lichtleitkörper 8 umfaßt einen Einkoppelteil 22 und einen Abstrahlteil 24, die einstückig miteinander verbunden sind.

Wie man den Figuren 2 und 3 entnimmt, besitzt der Einkoppelteil 22 in Richtung des Pfeiles II in Figur 1 gesehen die Form eines flachen, in vertikaler Richtung langgestreckten Quaders, während er in der Vorderansicht der Figur 1 im wesentlichen trapezförmig so ausgebildet ist, daß er sich nach oben hin verjüngt. In seine obere Stirnfläche 26 ist wiederum eine Vertiefung 28 eingearbeitet, in die sich die zugehörige Leuchtdiode 14 hinein erstreckt, um eine möglichst gute Einkoppelung des von ihr abgegebenen Lichts in den sich nach unten erweiternden Einkoppelteil 22 zu erzielen. Auch in dieser Vertiefung 28 kann eine (nicht dargestellte) vorzugsweise einstückig mit dem Einkoppelteil 22 ausgebildete, optisch wirksame Struktur, beispielsweise in Form einer Zylinderlinse vorgesehen sein, die den Öffnungswinkel des von der Leuchtdiode 14 abgegebenen Lichtbündels optimal an die Geometrie des Einkoppelteil 22 anpaßt. Auch hier ist vorgesehen, daß seine Außenflächen entweder verspiegelt sind und/oder daß die Einfallswinkel mit denen die von der Leuchtdiode 14 kommenden Lichtstrahlen von ihnen her auf seine Außenflächen fallen, unterhalb des Grenzwinkels der Totalreflexion bleiben, so daß praktisch das gesamte von der Leuchtdiode 14 in den Einkoppelteil 22 von oben her eingestrahlte Licht nach unten hin durch die Zone austritt, in der der Einkoppelteil 22 ohne Grenz- oder Zwischenfläche in den Abstrahlteil 24 übergeht.

Dieser Abstrahlteil 24 besitzt im wesentlichen die Form eines flachen Quaders, der an seiner Rückseite eine Spiegelstruktur, die bei dem gezeigten Ausführungsbeispiel die Form von zwei schräg gestellten Flächen 32, 33 (siehe Figur 3) besitzt, die entweder durch Totalreflexion und/oder durch eine auf ihre Außenseite aufgebrachte Verspiegelung das von oben kommende Licht in horizontale Richtung umlenken, sodaß es durch die rechteckige Vorderseite 34, die in etwa parallel zu Tür-Innenseite verläuft, im wesentlichen in horizontaler Richtung abgestrahlt wird. Zur Erzielung einer gewünschten, speziellen Lichtverteilung ist in der Vorderseite 34 eine aus im wesentlichen wagrecht verlaufenden, vorspringenden Rippen 36 bestehende optisch wirksame Struktur vorgesehen.

Der Leuchtfunktion einer Warnleuchte entsprechend gibt die Leuchtdiode 14 rotes Licht ab.

Wichtig bei der erfindungsgemäßen Anordnung ist, daß die beiden Teil-Lichtleitkörper 7, 8 nur in ihren unteren, d. h. von den beiden Leuchtdioden 12, 14 entfernt liegenden, hauptsächlich der Abstrahlung des jeweiligen Lichts dienenden Bereichen einstückig miteinander verbunden sind, während ihre oberen Bereiche, die der Einkoppelung und Richtungsgebung des von den Leuchtdioden 12, 14 abgegebenen Lichtes dienen, voneinander getrennt sind, wie dies insbesondere durch die in den Figuren 1 und 2 deutlich sichtbaren Spalte 38 und 40 zwischen dem trapezförmigen Einkoppelteil 22 des zweiten Teil-Lichtleitkörpers 8 und dem zu dessen Seitenfläche parallel verlaufenden ersten Teil-Lichtleitkörper 7 bzw. zwischen dem vor den ersten Teil-Lichtleitkörper 7 gezogenen, in Figur 1 linken Bereich des Abstrahlteils 24 und der Vorderseite des ersten Teil-Lichtleitkörpers bewirkt wird, so daß es trotz der Verwendung eines einzigen Lichtleitkörpers 10 zu keiner merklichen Vermischung der beiden farbig voneinander verschiedenen Lichtbündel kommt und die beiden Leuchtfunktionen farbig deutlich voneinander getrennt bleiben.

Vorzugsweise besteht der gemeinsame Lichtleitkörper 10 aus einem glasklaren Kunststoff.

Alle Reflexionsflächen können zusätzlich zum Beispiel durch Bedampfen verspiegelt sein.

Teile der Vorderseite des Abstrahlteils 24 können auch retroreflektierend ausgebildet sein. Dabei ist es möglich, die retroreflektierenden Bereiche beispielsweise durch Zwei-Komponenten-Spritzgießen andersfarbig auszubilden.

## Patentansprüche

1. Fahrzeugleuchte (5) zum Einbau in den unteren Bereich (2) der Innenseite einer Fahrzeugtür (1), wobei die Fahrzeugleuchte (5) zwei getrennte Lichtquellen-Anordnungen aufweist , von denen bei geöffneter Fahrzeugtür (1) die eine als Umfeldleuchte ihr Licht im wesentlichen nach unten zur Ausleuchtung des Bodens im Türeinstiegsbereich und die andere als Warnleuchte ihr Licht im wesentlichen horizontal, d. h. senkrecht zur Innenfläche der Tür (1) abgibt, **dadurch gekennzeichnet, dass** das Licht der beiden Lichtquellen-Anordnungen in einen gemeinsamen Lichtleitkörper (10) eingespeist, von diesem aber getrennt weitergeleitet und abgestrahlt wird.

2. Fahrzeugleuchte nach Anspruch 1, **dadurch gekennzeichnet, dass** der gemeinsame Lichtleitkörper (10) zur Realisierung der Umfeldleuchte einen ersten Teil-Lichtleitkörper (7) umfaßt, in den das Licht der zugehörigen Lichtquellen-Anordnung in Einbaulage von oben her eingekoppelt wird und der dieses Licht in Einbaulage im wesentlichen nach unten weiterleitet und abstrahlt, und dass der gemeinsame Lichtleitkörper (10) zur Realisierung der Warnleuchte einen zweiten Teil-Lichtleitkörper (8) umfaßt, in den das Licht der zugehörigen Lichtquellenanordnung in Einbaulage von oben her eingekoppelt wird und der dieses Licht umlenkt und in Einbaulage im wesentlichen in horizontaler Richtung abstrahlt.

3. Fahrzeugleuchte nach Anspruch 2, **dadurch gekennzeichnet, dass** der erste Teil-Lichtleitkörper (7) die Form eines länglichen, im Querschnitt im wesentlichen rechteckigen Prismas aufweist, in dessen in Einbaulage obere Stirnfläche (16) das Licht der zugehörigen Lichtquellen-Anordnung eingekoppelt wird und dessen in Einbaulage untere Stirnfläche (20) das Licht im Türeinstiegsbereich zum Boden hin abstrahlt.

4. Fahrzeugleuchte nach Anspruch 3, **dadurch gekennzeichnet, dass** die untere Stirnfläche (20) eine optisch wirksame Struktur zur Erzielung einer gewünschten, speziellen Lichtverteilung aufweist.

5. Fahrzeugleuchte nach einem der Ansprüche 2 bis 4, **dadurch gekennzeichnet, dass** der zweite Teil-Lichtleitkörper (8) einen im wesentlichen die Form eines flachen Quaders besitzenden Abstrahlteil (24) umfaßt, durch dessen obere Schmalseite das von der Lichtquellenanordnung kommende Licht eintritt und der an seiner Rückseite Umlenkstrukturen (32, 33) aufweist, die das von oben kommende Licht in etwa um 90° umlenken, so dass es durch seine Vorderseite (34) austritt.

6. Fahrzeugleuchte nach Anspruch 5, **dadurch gekennzeichnet, dass** die Vorderseite (34) eine optisch wirksame Struktur (36) zur Erzielung einer gewünschten, speziellen Lichtverteilung aufweist.

7. Fahrzeugleuchte nach einem der Ansprüche 2 bis 6, **dadurch gekennzeichnet, dass** der zweite Teil-Lichtleitkörper (8) einen den Abstrahlteil (24) in Einbaulage nach oben fortsetzenden, entgegen der Lichtabstrahlrichtung gesehen in etwa trapezförmigen, sich nach oben verjüngenden Einkoppelteil (22) aufweist, durch dessen obere Schmalseite das Licht der zugehörigen Lichtquellen-Anordnung eingekoppelt wird, das er nach unten in den Abstrahlteil (24) weiterleitet.

8. Fahrzeugleuchte nach einem der vorhergehenden Ansprüche, **dadurch gekennzeichnet, dass** sie im Zusammenhang mit der Leuchtfunktion der Umfeldleuchte im wesentlichen weißes Licht und im Zusammenhang mit der Leuchtfunktion der Warnleuchte im wesentlichen rotes Licht abgibt.

9. Fahrzeugleuchte nach einem der vorhergehenden Ansprüche, **dadurch gekennzeichnet, dass** jede der beiden Lichtquellen-Anordnungen eine Leuchtdiode (12 bzw. 14) umfaßt.
